# EUROPEAN PATENT APPLICATION

(11) **EP 4 641 102 A1**
(43) Date of publication of application: **29.10.2025**
(21) Application number: 24172847.6
(22) Date of filing: 26.04.2024
(51) Int. Cl.: F24F 11/30, F24F 11/88, H01R 13/00, G05B 19/414

(54) **A CONTROL SYSTEM FOR A HVAC SYSTEM**

(71) Applicant: Pittway Sarl, 1180 Rolle (CH)
(72) Inventor: BRABEC, Jan, Brno (CZ); VECHET, Jiri, Brno (CZ); KALVODA, Pavel, Brno (CZ)
(74) Representative: Murgitroyd & Company

(57) **Abstract**

The present disclosure provides a control system for a HVAC system configured to control a flow of a medium throughout the HVAC system, the control system comprising: a controller; a first valve; a first actuator configured to receive instructions from the controller and regulate the flow of the medium through the first valve based on the received instructions; and a first junction box connected to the first actuator using a single cable, the first junction box connecting the first actuator to the controller; wherein the first junction box enables both daisy chain wiring and T-junction connection between the controller, the first actuator and a further element of the system.

## Description

### TECHNICAL FIELD

The present disclosure relates generally to a control system for a heating, ventilation and air conditioning (HVAC) system and find particular, although not exclusive, utility in providing a junction box that allows for a controller to be connected to an actuator via a single cable.

### BACKGROUND

A HVAC system is designed to provide thermal comfort and air quality in a building and may operate by circulating air and controlling the temperature, humidity, and air quality. A typical HVAC system includes several components, including: an air handler that circulates the air throughout the building; a condenser coil located outside the building that is responsible for cooling the hot refrigerant gas that comes from the air handler; an evaporator coil located inside the building that is responsible for cooling the air that is circulated through the air handler; a compressor that is responsible for compressing the refrigerant gas and pumping it through the system; refrigerant lines that carry the refrigerant gas between the evaporator coil, compressor, and condenser coil; a thermostat that controls the temperature of the system and tells the compressor when to turn on and off; and ductwork which is a network of ducts that carries the air throughout the building.

During operation to cool the building, the system the thermostat senses the temperature in the building is above a desired temperature and sends a signal to the compressor to turn on or off. When the compressor is on, it pumps refrigerant gas through the system, which causes the evaporator coil to cool the air that is circulated through the air handler. The cooled air is then distributed throughout the building through the ductwork. The warm air from the building is drawn into the air handler, where it passes over the condenser coil and is cooled. The cooled air is then returned to the building through the ductwork. The refrigerant gas is pumped back to the compressor, where it is compressed and sent back through the system.

The HVAC system will typically include one or more actuators configured to operate valves within the system, to allow or prevent the fluid flowing through the associated valve.

In a smart system, the actuators may be electronically controlled and actuated by a controller.

During installation of such a HVAC system, it is typically necessary to daisy-chain each of the components, such as the controller and actuators, which requires significant installation time and an undesirably high amount of cable.

It is therefore desirable to provide a HVAC control system without these undesirable characteristics. The aspects of the present disclosure provide such a HVAC control system.

### SUMMARY

According to a first aspect, there is provided a control system for a HVAC system configured to control a flow of a medium throughout the HVAC system, the control system comprising: a controller; a first valve; a first actuator configured to receive instructions from the controller and regulate the flow of the medium through the first valve based on the received instructions; and a first junction box connected to the first actuator using a single cable, the first junction box connecting the first actuator to the controller; wherein the first junction box enables both daisy chain wiring and T-junction connection between the controller, the first actuator and a further element of the system.

In this way, the first junction box may be used to connect the first actuator to the controller with only a single cable, whilst also enabling both daisy chain wiring and T-junction connection between the controller, the first actuator and a further element of the system.

The control system for a HVAC system may be a system that is able to operate the HVAC system to provide a desired operation. For example, if it is determined that a room in a building is too hot, the control system may control the HVAC system to cool the room, by providing cooled medium to the room or otherwise. The medium may be water, air or any other known medium.

The first valve may allow or restrict flow through an associated pipe or duct. The first actuator may actuate, move or otherwise operate the first valve to any position between an open position and a closed position.

The first junction box may be a component wherein electrical connections are made. The junction box may be waterproof or water resistant. The first junction box being connected to the first actuator with a single cable means that no other cables are necessary between the first junction box and the first actuator.

The further element of the system may comprise a second junction box where connection to a second actuator is realized. The second junction box may connect to a third junction box, where connection to a third actuator is realized. The control system may comprise any number of junction boxes and associated actuators.

The single cable connecting the first junction box to the first actuator may comprise six electrically isolated conductors. Any other number of such conductors may be provided, and the number of such conductors provided may be dependent on a specific use case.

The six conductors may be arranged into two pairs of conductors and two single conductors. A first pair of the conductors may carry a first data signal. A second pair of the conductors may carry a second data signal. For example, the first data signal may comprise a non-inverting signal and the second data signal may comprise an inverting signal. A first single conductor may be a ground, neutral or any other common conductor. A second single conductor may carry a voltage with alternating current or direct current. The first actuator may be configured to be powered by the potential difference between the first single conductor and the second single conductor.

A first pair of conductors may have a first colour sheath. The first colour may indicate a first data type, such as a non-inverting signal. A second pair of conductors may have a second colour sheath. The second colour may indicate a second data type, such as an inverting signal. A first single conductor may have a third colour sheath. The third colour may indicate a ground or neutral, such as blue, black, or any other colour according to local regulations. A second single conductor may have a fourth colour sheath. The fourth colour may indicate live, such as brown, red, or any other colour according to local regulations.

The first junction box may comprise a housing and at least four electrical connection points therein. A first electrical connection point may be associated with the first pair of conductors. A second electrical connection point may be associated with the second pair of electrical conductors. A third electrical connection point may be associated with the first single conductor. A fourth electrical connection point may be associated with the second single conductor. The third and fourth electrical connection points may allow for T-junction connection between the controller, the first actuator and the further element of the system. The first and second electrical connection points may allow for daisy-chain wiring or T-junction connection between the controller, the first actuator and the further element of the system.

To arrange the junction box in the daisy-chain wiring configuration, both conductors of the pair of conductors may be connected within the junction box. In this way, the actuator may be connected to the controller via a first conductor of the pair of conductors, and the actuator may be connected to the further element of the system via a second conductor of the pair of conductors.

To arrange the junction box in the T-junction connection arrangement, only a first conductor of the pair of conductors may be connected within the junction box. In this way, the actuator may be connected to both the controller and the further element of the system via the first conductor of the pair of conductors. The second conductor of the pair of conductors may be redundant.

The single cable connecting the first junction box to the first actuator may be fixed to the housing of the actuator. Accordingly, the junction box may be provided with the single cable fixedly attached thereto. No user-operable connection may be provided between the junction box and the single cable.

Each of the at least four electrical connection points may comprise at least one conductor fixed therein. A first conductor of the first pair of conductors may be fixed within the first connection point. Accordingly, the user may simply connect the second conductor of the pair of conductors to enable daisy-chain wiring, or leave the second conductor of the pair of conductors unconnected to enable T-junction connection. The second connection point and second pair of conductors may be similarly arranged. The first single conductor may be fixed within the third connect point, and the second single conductor may be fixed within the fourth connection point, such that a user does not need to make this connection when installing the junction box.

In the daisy-chain wiring configuration, the first junction box may be arranged such that at least one conductor from the controller enters the first junction box, leaves the first junction box via the single cable, re-enters the first junction box via the single cable, and exits the first junction box for connection to the further element of the system. In the daisy-chain wiring configuration, the first junction box may be arranged such that two conductors from the controller enter the first junction box, leave the first junction box via the single cable, re-enter the first junction box via the single cable, and exit the first junction box for connection to the further element of the system. In this way, data carrying communication conductors may be daisy-chained between components.

In the T-junction connection arrangement, the first junction box may be arranged such that at least one conductor from the controller enters the first junction box, leaves the first junction box via the single cable, re-enters the first junction box via the single cable, and is left unconnected in the first junction box. In the T-junction connection arrangement, the first junction box may be arranged such that two conductors from the controller enter the first junction box, leave the first junction box via the single cable, re-enter the first junction box via the single cable, and are left unconnected in the first junction box. In this way, data carrying communication conductors or power carrying and ground conductors may be connected between components in T-junction connections.

The first actuator may be arranged to communicate with the controller with Field BUS communication. Field BUS is a communication protocol that may be used in industrial automation systems for transmitting data between devices. It is a serial communication protocol that allows multiple devices to communicate with each other over a single cable. Field BUS communication works by using a master device, such as a building management system controller (BMS controller) or programmable logic controller (PLC), to poll slave devices, such as sensors and actuators, to request data or send commands. The slave devices respond to the master's requests by sending data or acknowledging commands. The communication takes place on a dedicated bus, which is a cable that connects all the devices in the system. In the present disclosure, the controller may be the master device and the first actuator may be a slave device.

The control system may be arranged with the first junction box in the daisy chain wiring configuration. Alternatively, the control system may be arranged with the first junction box in the T-junction connection configuration. In another example, the first junction box may be arranged to daisy-chain a first communication conductor and T-junction a second communication conductor.

According to a second aspect, there is provided a method of installing the control system of the first aspect, the method comprising connecting the controller to the first actuator via the first junction box, wherein the first junction box is arranged in the daisy-chain wiring configuration or in the T-junction connection configuration. In one example, the first junction box may be configured to daisy-chain a first conductor and T-junction a second conductor.

Any feature disclosed with respect to one aspect may be combined with another aspect disclosed herein.

### BRIEF DESCRIPTION OF THE FIGURES

The disclosure will be further described with reference to examples depicted in the accompanying figures in which:
Figure 1 is a schematic plan of a prior known wiring connection arrangement for a HVAC control system;
Figure 2 is a schematic plan of a different wiring connection arrangement for a HVAC control system; and
Figure 3 is a schematic plan showing the wiring arrangement of the junction box of Figure 2.

### DETAILED DESCRIPTION

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of' such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

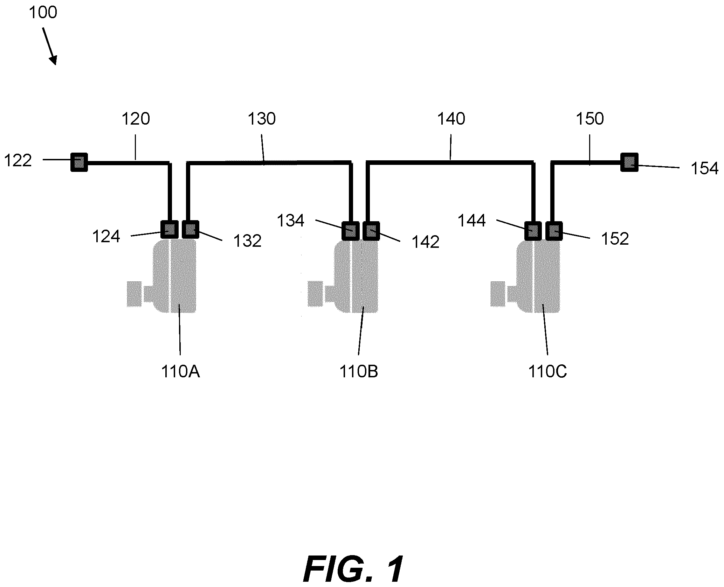

Figure 1 is a schematic plan of a prior known wiring connection arrangement 100 for a HVAC control system. The arrangement includes a first actuator 110A, a second actuator 110B and a third actuator 110C in a daisy-chain wiring arrangement. The arrangement 100 includes a first cable 120, a second cable 130, a third cable 140 and a fourth cable 150.

The first cable 120 includes a first connector 122 at a first end thereof which may be used to connect to a controller or other component. The first cable 120 also includes a second connector 124 at a second end thereof which is connected to the first actuator 110A.

The second cable 130 includes a first connector 132 at a first end thereof which is connected to the first actuator 110A. The second cable 130 also includes a second connector 134 at a second end thereof which is connected to the second actuator 110B.

The third cable 140 includes a first connector 142 at a first end thereof which is connected to the second actuator 110B. The third cable 140 also includes a second connector 144 at a second end thereof which is connected to the third actuator 110C.

The fourth cable 150 includes a first connector 152 at a first end thereof which is connected to the third actuator 110C. The fourth cable 150 also includes a second connector 154 at a second end thereof which may be used to connect to another component, such as a further actuator.

Each of the first cable 120, the second cable 130, the third cable 140 and the fourth cable 150 include four electrically isolated conductors. First and second conductors are used to provide non-inverting and inverting data signals respectively. Third and fourth conductors are used to provide power, for example with the third conductor providing a ground or common, and the fourth conductor providing a current.

As can be seen in Figure 1, each actuator 110A, 110B, 110C has two cables attached thereto. Such an arrangement is considered undesirable because additional cable and additional installer time is required.

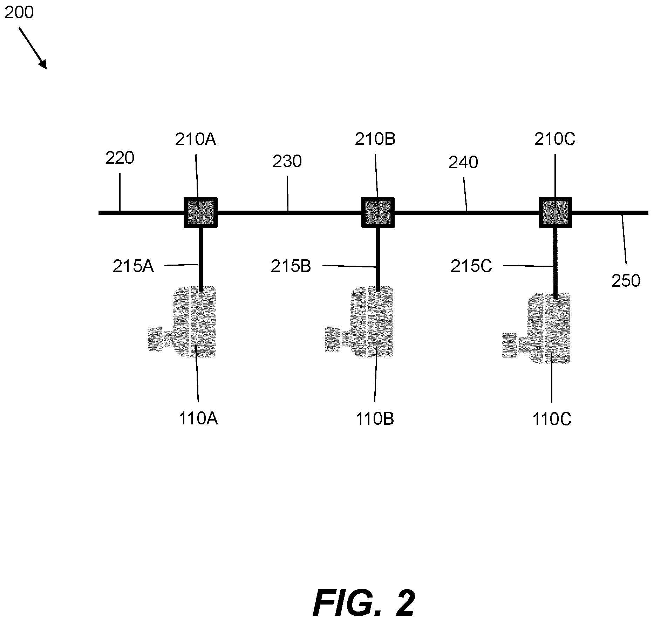

Figure 2 is a schematic plan of a different wiring connection arrangement 200 for a HVAC control system. Similar to the arrangement 100 of Figure 1, the wiring connection arrangement 200 includes a first actuator 110A, a second actuator 110B and a third actuator 110C.

The arrangement 200 also includes a first junction box 210A, a second junction box 210B and a third junction box 210C. The first junction box 210A is fixedly attached to the first actuator 110A via a first single cable 215A. The second junction box 210B is fixedly attached to the second actuator 110B via a second single cable 215B. The third junction box 210C is fixedly attached to the third actuator 110C via a third single cable 215C.

Accordingly, only a single cable is required to attach to each actuator 110A, 110B, 110C, rather than two cables as in Figure 1.

Similar to the arrangement 100 of Figure 1, the arrangement 200 of Figure 2 includes a first cable 220, a second cable 230, a third cable 240 and a fourth cable 250. The first cable 220 may be attached at a first end thereof to a controller, and is attached at a second end thereof to the first junction box 210A. The second cable 230 is attached at a first end thereof to the first junction box 210A, and at a second end thereof to the second junction box 210B. The third cable 240 is attached at a first end thereof to the second junction box 210B, and at a second end thereof to the third junction box 210C. The fourth cable 250 is attached at a first end thereof to the third junction box 210C, and may be attached at a second end thereof to a further component such as a further junction box.

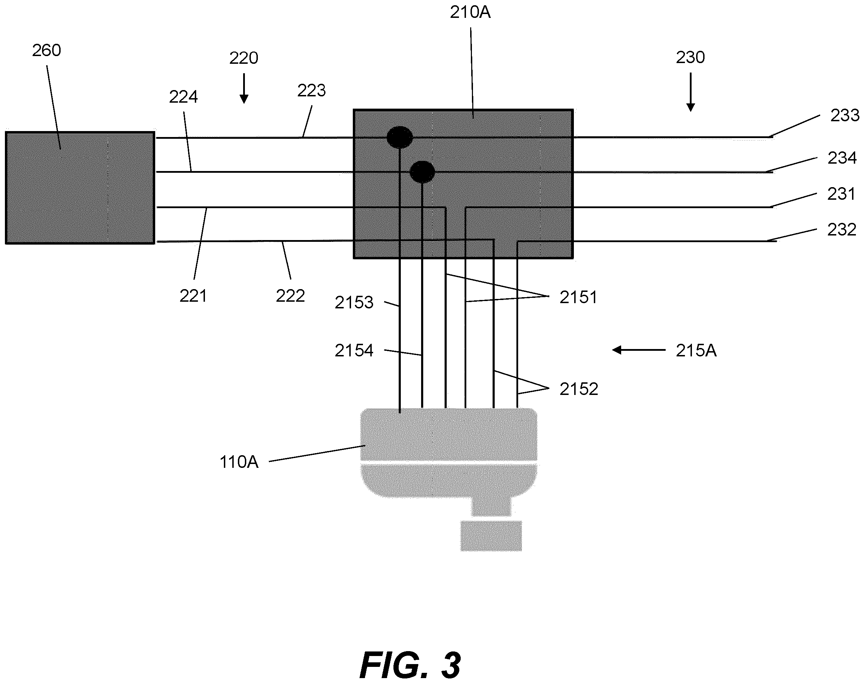

Similar to the arrangement 100 shown in Figure 1, the first cable 220, the second cable 230, the third cable 240 and the fourth cable 250 include four conductors. However, the first single cable 215A, the second single cable 215B and the third single cable 215C each include six electrically isolated conductors which are described in more detail with reference to Figure 3.

Figure 3 is a schematic plan showing the wiring arrangement of the first junction box 210A of Figure 2. Although only the first junction box 210A is shown, the second junction box 210B and the third junction box 210C may be arranged similarly.

The first junction box 210A is connected to a controller 260 via the first cable 220. As explained previously, the first cable includes a first conductor 221 carrying a non-inverting data signal, a second conductor 222 carrying an inverting data signal, a third conductor 223 acting as a ground, and a fourth conductor 224 carrying a current, either direct current or alternating current.

The first junction box 210A is connected to the second junction box (not shown) via the second cable 230. As explained previously, the second cable includes a first conductor 231 carrying a non-inverting data signal, a second conductor 232 carrying an inverting data signal, a third conductor 233 acting as a ground, and a fourth conductor 234 carrying the current, either direct current or alternating current.

The first single cable 215A includes six conductors arranged as two single conductors and two pairs of conductors.

A first pair of conductors 2151 are connected to the first conductor 221 of the first cable 220 and the first conductor 231 of the second cable 230 such that the first conductor of the first cable 220 and second cable 230 are connected in daisy-chain wiring to the first actuator 110A. In another example, only one of the first pair of conductors 2151 may be connected such that a T-junction connection is provided. The first pair of conductors 2151 may have a first colour sheath, denoting the non-inverting signal.

A second pair of conductors 2152 are connected to the second conductor 222 of the first cable 220 and the second conductor 232 of the second cable 230 such that the second conductor of the first cable 220 and second cable 230 are connected in daisy-chain wiring to the first actuator 110A. In another example, only one of the second pair of conductors 2152 may be connected such that a T-junction connection is provided. The second pair of conductors 2152 may have a second colour sheath, denoting the inverting signal. The second colour may be different to the first colour.

A first single conductor 2153 is connected to the third conductor 223 of the first cable 220 and the third conductor 233 of the second cable 230 in a T-junction connection within the first junction box 110A. Accordingly, a common ground is provided. The first single conductor 2153 may have a third colour sheath, denoting the ground. The third colour may be different to the first colour and the second colour, and may preferably be a colour designated by a local code or standard.

A second single conductor 2154 is connected to the fourth conductor 224 of the first cable 220 and the fourth conductor 234 of the second cable 230 in a T-junction connection within the first junction box 110A. Accordingly, a common live conductor is provided. The second single conductor 2154 may have a fourth colour sheath, denoting the live conductor. The fourth colour may be different to the first colour, the second colour and the third colour, and may preferably be a colour designated by a local code or standard.

In some examples, the first single conductor 2153 may be fixed within a T-junction terminal within the first junction box 110A, such that a user does not need to make this connection when installing the system. The first junction box 110A may comprise user-operable connections to which the third conductor 223 of the first cable 220 and the third conductor 233 of the second cable 230 may attach to make the T-junction connection with the first single conductor 2153.

In some examples, the second single conductor 2154 may be fixed within a T-junction terminal within the first junction box 110A, such that a user does not need to make this connection when installing the system. The first junction box 110A may comprise user-operable connections to which the fourth conductor 224 of the first cable 220 and the fourth conductor 234 of the second cable 230 may attach to make the T-junction connection with the second single conductor 2154.

In some examples, only one of the first pair of conductors 2151 may be fixed within a terminal within the first junction box 110A, such that a user does not need to make this connection when installing the system. The other of the first pair of conductors 2151 may be left disconnected so that a user may leave the conductor disconnected for a T-junction connection, or connect the conductor for daisy-chain wiring. The first junction box 110A may comprise user-operable connections to which the first conductor 221 of the first cable 220 and the first conductor 231 of the second cable 230 may attach to make the T-junction or daisy chain connection with the first pair of conductors 2151.

In some examples, only one of the second pair of conductors 2152 may be fixed within a terminal within the first junction box 110A, such that a user does not need to make this connection when installing the system. The other of the second pair of conductors 2152 may be left disconnected so that a user may leave the conductor disconnected for a T-junction connection, or connect the conductor for daisy-chain wiring. The first junction box 110A may comprise user-operable connections to which the second conductor 222 of the first cable 220 and the second conductor 232 of the second cable 230 may attach to make the T-junction or daisy chain connection with the second pair of conductors 2152.

## Claims

1. A control system for a HVAC system configured to control a flow of a medium throughout the HVAC system, the control system comprising:
a controller;
a first valve;
a first actuator configured to receive instructions from the controller and regulate the flow of the medium through the first valve based on the received instructions; and
a first junction box connected to the first actuator using a single cable, the first junction box connecting the first actuator to the controller;
wherein the first junction box enables both daisy chain wiring and T-junction connection between the controller, the first actuator and a further element of the system.

2. The control system of claim 1, wherein the further element of the system comprises a second junction box where connection to a second actuator is realized.

3. The control system of claim 1 or 2, wherein the single cable connecting the first junction box to the first actuator comprises six electrically isolated conductors.

4. The control system of claim 3, wherein the six conductors are arranged into two pairs of conductors and two single conductors.

5. The control system of any preceding claim, wherein a first pair of conductors has a first colour sheath, a second pair of conductors has a second colour sheath, a first single conductor has a third colour sheath, and a second single conductor has a fourth colour sheath.

6. The control system of any preceding claim, wherein the first junction box comprises a housing and at least four electrical connection points therein, wherein the single cable connecting the first junction box to the first actuator is fixed to the housing of the actuator.

7. The control system of claim 6, wherein each of the at least four electrical connection points comprise at least one conductor fixed therein.

8. The control system of any preceding claim, wherein in the daisy-chain wiring configuration, the first junction box is arranged such that at least one conductor from the controller enters the first junction box, leaves the first junction box via the single cable, re-enters the first junction box via the single cable, and exits the first junction box for connection to the further element of the system.

9. The control system of claim 8, wherein in the daisy-chain wiring configuration, the first junction box is arranged such that two conductors from the controller enter the first junction box, leave the first junction box via the single cable, re-enter the first junction box via the single cable, and exit the first junction box for connection to the further element of the system.

10. The control system of any preceding claim, wherein in the T-junction connection arrangement, the first junction box is arranged such that at least one conductor from the controller enters the first junction box, leaves the first junction box via the single cable, re-enters the first junction box via the single cable, and is left unconnected in the first junction box.

11. The control system of claim 10, wherein in the T-junction connection arrangement, the first junction box is arranged such that two conductors from the controller enter the first junction box, leave the first junction box via the single cable, re-enter the first junction box via the single cable, and are left unconnected in the first junction box.

12. The control system of any preceding claim, wherein the first actuator is arranged to communicate with the controller with Field BUS communication.

13. The control system of any preceding claim, wherein the control system is arranged with the first junction box in the daisy chain wiring configuration.

14. The control system of any of claims 1 to 12, wherein the control system is arranged with the first junction box in the T-junction connection configuration.

15. A method of installing the control system of any preceding claim, the method comprising connecting the controller to the first actuator via the first junction box, wherein the first junction box is arranged in the daisy chain wiring configuration or in the T-junction connection configuration.
